# EUROPÄISCHE PATENTSCHRIFT

(11) **EP 0 736 942 B1**
(45) Veröffentlichungstag und Bekanntmachung des Hinweises auf die Patenterteilung: **24.05.2000**
(21) Anmeldenummer: 96102970.9
(22) Anmeldetag: 28.02.1996
(51) Int. Cl.: H02G 3/30

(54) **Zugentlastung für Leitungen**
Strain relief for cables
Soulagement de contrainte pour câbles

(30) Priorität: 03.04.1995 DE 29505548 U; 26.07.1995 DE 29512060 U
(43) Veröffentlichungstag der Anmeldung: 09.10.1996
(73) Patentinhaber: MURRPLASTIK GmbH, SYSTEM-TECHNIK, D-71570 Oppenweiler (DE)
(72) Erfinder: Ehmann, Bruno, D-73563 Mögglingen (DE); Funk, Rainer, D-71543 Wüstenrot (DE)
(74) Vertreter: Fleck, Hermann-Josef, Dr.-Ing.

(56) Entgegenhaltungen:
- EP-A- 0 118 986
- DE-U- 7 014 235
- DE-U- 9 204 909
- FR-A- 2 211 993
- US-A- 5 090 922

## Beschreibung

Die Erfindung betrifft eine Vorrichtung zum Verhindern der mechanischen Beanspruchung von Leitungen nach dem Oberbegriff des Anspruchs 1.

Aus der FR-A-2 211 993 ist eine Vorrichtung der im Oberbegriff des Anspruchs 1 genannten Art bekannt. Dort ist der Grundkörper als Montageplatte ausgebildet, die eine Ausnehmung aufweist, in der Rastelemente des Befestigungsorgans einrastbar sind. Wird der Grundkörper zur Zugentlastung von Leitungen verwendet, so ist diese Art der Verbindung des Grundkörpers mit dem Befestigungsorgan den bei der Zugbeanspruchung an den Leitungen auftretenden Kräften nicht gewachsen; der Grundkörper könnte sich vom Befestigungsorgan lösen. Ferner ist für das Einrasten des Grundkörpers auf das Befestigungsorgan Montagezeit nötig.

Die Aufgabe der Erfindung besteht darin, eine Vorrichtung nach dem Oberbegriff des Anspruchs 1 zu schaffen, bei der die Verbindung des Grundkörpers mit dem Befestigungsorgan besonders stabil und einfach gestaltet ist und ohne Befestigungs- oder Rastmittel und ohne Montagezeit auskommt.

Diese Aufgabe wird mit den Merkmalen des Anspruchs 1 gelöst.

Diese Maßnahme ist dann vorteilhaft, wenn die Vorrichtung für Schienen vorgesehen ist, auf denen sie eine genau definierte Position einnimmt, und die Ausrichtung der Schiene an sich bekannt ist.

Ferner sieht eine besonders zweckmäßige Ausgestaltung der Erfindung vor, daß das Befestigungsorgan Schnapp- und/oder Rastmiitel aufweist, die mit den Schienen lösbar verbindbar sind. Handelt es sich um Befestigungsorgane, die mit einer U-förmigen Schiene mit Abbiegungen verbindbar sein sollen, dann ist es zweckmäßig, wenn die Schnapp- und/oder Rastmittel mit den Abbiegungen form- und/oder kraftschlüssig verbindbar sind. Im Rahmen dieses Erfindungsgedankens ist es besonders zweckmäßig, wenn die Schnapp- und/oder Rastmittel aus elastisch verformbarem Werkstoff bestehen. Durch diese Maßnahme ist es möglich, zunächst die Kabel mit der Vorrichtung zu verbinden und sodann diese auf die Schiene eines Schaltschrankes aufzurasten. Berücksichtigt man, daß in Schaltschränken der Platz für einzelne Kabel optimiert ist und der Installateur sehr wenig Manipulationsraum hat, ist ersichtlich, daß durch die vorgeschlagene Maßnahme ein besonders großer Vorteil erreicht wird.

Einige Ausführungsbeispiele der Erfindung sind in der Zeichnung schematisch dargestellt und werden im folgenden näher erläutert. Es zeigen
- Fig. 1: eine Vorrichtung in Seitenansicht,
- Fig. 2: die in Fig. 1 dargestellte Vorrichtung in Richtung des Pfeiles II,
- Fig. 3: die in Fig. 1 dargestellte Vorrichtung in Richtung des Pfeiles III,
- Fig. 4: die in Fig. 2 dargestellte Vorrichtung mit einer Schiene und vergrößert dargestellt,
- Fig. 5: eine weitere Vorrichtung mit einer anderen Schiene,
- Fig. 6: die in Fig. 5 dargestellte Vorrichtung mit einer anderen Schiene,
- Fig. 7: eine weitere Vorrichtung in Seitenansicht,
- Fig. 8: die in Fig. 7 dargestellte Vorrichtung in Richtung des Pfeiles VIII,
- Fig. 9: die in Fig. 7 dargestellte Vorrichtung in Richtung des Pfeiles IX und
- Fig. 10: die in Fig. 8 dargestellte Vorrichtung, deren Befestigungsorgan um 90° verdreht ist.

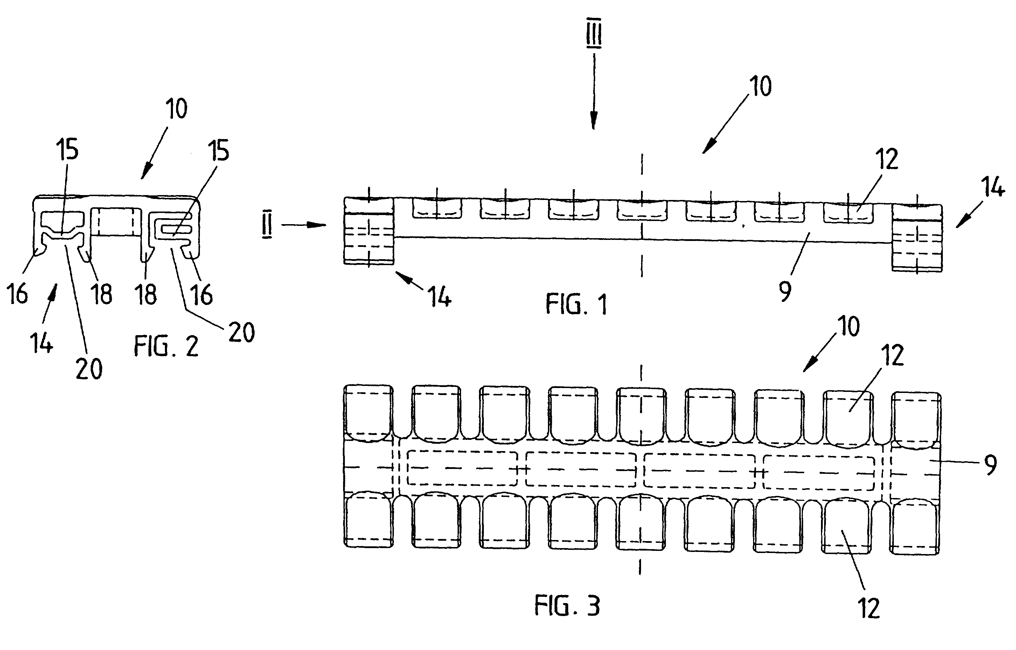

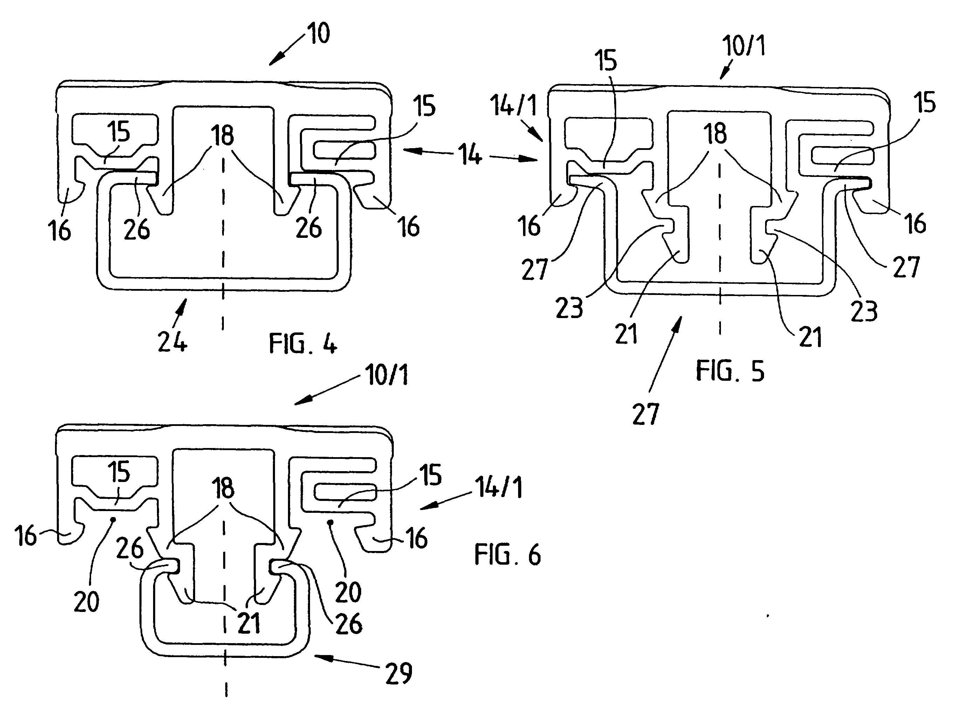

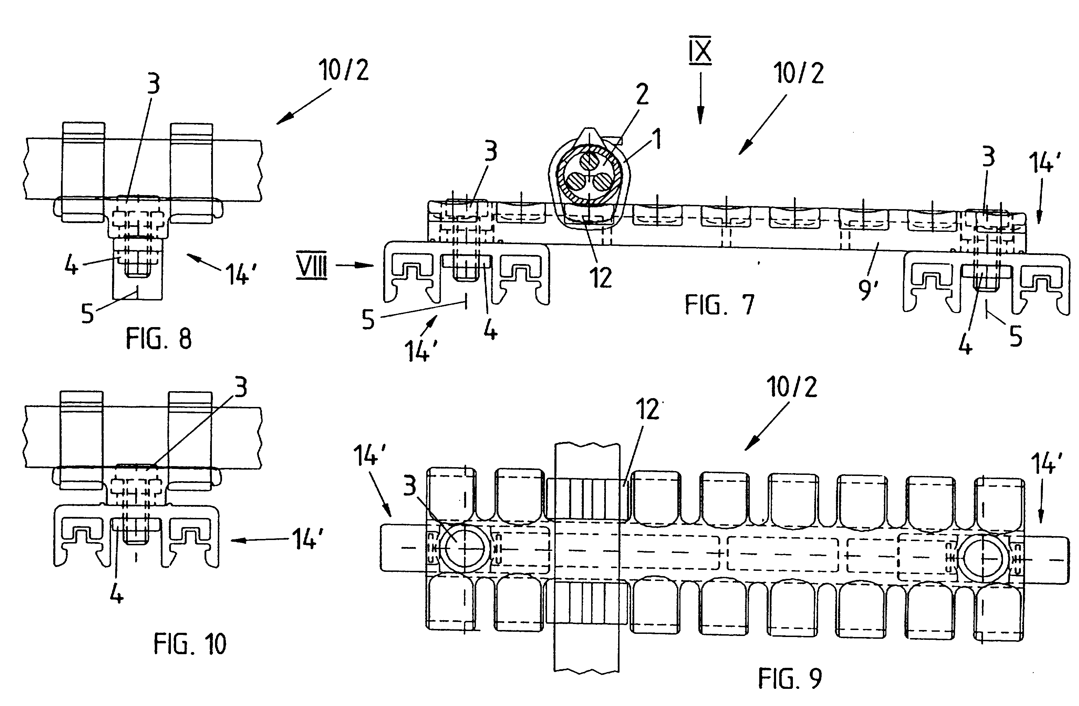

In den Figuren 1 bis 9 sind Vorrichtungen 10, 10/1 und 10/2 zum Verhindern der mechanischen Beanspruchung von Leitungen 2 mit einem Grundkörper 9 bzw. 9' sowie Verbindungskörpern 1 dargestellt. Durch die Verbindungskörper 1 sind Leitungen 2 mit dem Grundkörper 9 bzw. 9' verbindbar. Man erkennt, daß jeder Grundkörper 9, 9' ein Befestigungsorgan 14, 14' aufweist, das mit einer Schiene 24, 27, 29 (vgl. Figuren 4, 5 und 6) lösbar verbindbar sind. Das in den Figuren 1 bis 6 dargestellte Befestigungsorgan 14 ist mit dem Grundkörper 9 einstückig ausgebildet, während das Befestigungsorgan 14' gemäß Figuren 7, 8, 9 und 10 ein separates Teil ist. Die Befestigungsorgane 14, 14' besitzen Schnapp- und/oder Rastmittel 16, 18 mit Stützflächen 15, so daß eine Befestigung an U-förmigen Schienen 24, 27, 29 mit Abbiegungen 26, 27' problemlos herzustellen ist. Die in den Figuren 5 und 6 dargestellten Rastmittel 18 tragen Rastnasen 21 mit Einschnitten 23, in welche die Abbiegungen 26 (vgl. Fig. 6) einrasten können. Da die Nasen 21 sich von ihrem unteren Ende nach oben zu erweitern und elastisch nach innen zu verformbar sind, können die Abbiegungen 26 der Schiene 29 in die Einschnitte 23 problemlos einschnappen. Die Aufnahmen 20, die durch die Schnapp- und/oder Rastmittel 16, 18 definiert sind, sind auf die Länge der Abbiegungen 26, 27' abgestimmt.

Die Figuren 7 bis 10 lassen erkennen, daß der Grundkörper 9' mit den Befestigungsorganen 14' mittels Schrauben 3 und Muttern 4 lösbar verbindbar ist. Durch diese Maßnahmen ist es möglich, den Rastfuß 14' um die Achse 5 der Schraube 3 zu verdrehen und optimal zu positionieren. Hat das Befestigungsorgan 14' die gewünschte Position eingenommen, dann wird die Mutter fest angezogen, so daß eine unverdrehbare Verbindung zwischen dem Befestigungsorgan 14' und dem Grundkörper 9' hergestellt ist. Der Grundkörper 9' ist ein in Richtung der Schiene sich erstreckender Körper mit einer Vielzahl kammartiger Vorsprünge 12, die sich in Richtung der Kabel erstrecken, auf denen sich die Kabel 2 abstützen und durch die Verbindungskörper 1 festgehalten werden. Besonders vorteilhaft ist es, die aus Kunststoff bestehende Zugentlastung für elektrische Kabel zu verwenden, die innerhalb eines Schaltschrankes angebracht werden können. Dabei ist es zweckmäßig, wenn die Zugentlastung aus einem elektrisch leitendem Werkstoff besteht bzw. mit einem solchen verkleidet oder überzogen ist. Hierdurch wird erreicht, daß die Induktionsströme der elektrischen Kabel im Schaltschrank abgeleitet werden. Alternativ hierzu kann vorgesehen sein, daß zwischen den elektrischen Leitungen und dem Tragkörper 1 ein aus elektrisch leitendem Werkstoff bestehendes Zwischenstück angeordnet ist, das die Leitung(en) mit dem Tragkörper elektrisch verbindet.

## Patentansprüche

1. Vorrichtung (10) zum Verhindern der mechanischen Beanspruchung von Leitungen (2) mit einem Grundkörper (9, 9'), mindestens einem Verbindungskörper (1), durch den die Leitungen (2) mit dem Grundkörper (9, 9') verbindbar sind, und mindestens einem Befestigungsorgan (14, 14') mit Schnapp- und/oder Rastmitteln (16, 18), das mit einem Träger (24, 27, 29), vorzugsweise Schiene, verbindbar ist, wobei die Schnapp- und/oder Rastmittel (16,18) unterschiedliche Formen besitzen, so daß das Befestigungsorgan (14, 14') mit mindestens zwei, drei oder mehreren Trägern (24, 27, 29) unterschiedlicher Art verbindbar ist,
dadurch gekennzeichnet,
daß das Befestigungsorgan (14, 14') mit dem Grundkörper (9) einstückig ausgebildet ist.

2. Vorrichtung nach Anspruch 1 für parallel nebeneinander angeordneten Leitungen,
dadurch gekennzeichet,
daß der Grundkörper (9, 9') ein gestreckter Körper ist, der für die Leitungen (2) Halteorgane, vorzugsweise Vorsprünge (12), aufweist.

3. Vorrichtung nach Anspruch 1 oder 2,
dadurch gekennzeichnet,
daß der Grundkörper (9,9') sich in Richtung der Träger (24,27,29) erstreckt, während die Halteorgane (12) parallel nebeneinander angeordnet sind und in Richtung der Leitungen (2) weisen.

4. Vorrichtung nach einem der Ansprüche 1 bis 3,
dadurch gekennzeichnet,
daß mindestens zwei Befestigungsorgane (14, 14') vorgesehen sind.

5. Vorrichtung nach einem der Ansprüche 1 bis 4,
dadurch gekennzeichnet,
daß die Befestigungsorgane (14,14') mit Abstand zueinander angeordnet sind.

6. Vorrichtung nach einem der Ansprüche 1 bis 5,
daduch gekennzeichnet,
daß die Befestigungsorgane (14,14') im Endbereich der Grundkörper (9,9') angeordnet sind.

7. Vorrichtung nach einem der Ansprüche 1 bis 6,
dadurch gekennzeichnet,
daß die Befestigungsorgane (14') separate Teile sind, die mit dem Grundkörper (9') verbindbar sind.

8. Vorrichtung nach einem der Ansprüche 1 bis 7,
dadurch gekennzeichnet,
daß die Befestigungsorgane (14,14') mit dem Träger (24,27,29) lösbar verbindbar sind.

9. Vorrichtung nach einem der Ansprüche 1 bis 8, deren Befestigungsorgan (14,14') mit einer U-förmigen Schiene (24) mit Abbiegungen (26,27') verbindbar ist,
dadurch gekennzeichnet,
daß die Schnapp- und/oder Rastmittel (16,18) mit den Abbiegungen (26,27') form- und/oder kraftschlüssig verbindbar sind.

10. Vorrichtung nach einem der Ansprüche 1 bis 9,
dadurch gekennzeichnet,
daß die Schnapp- und/oder Rastmittel (16, 18) ) aus einem elastisch verformbarem Werkstück bestehen.

11. Vorrichtung nach einem der Ansprüche 1 bis 10,
dadurch gekennzeichnet,
daß die elektrischen Leitungen (2) mit dem Tragkörper (24,27,29) elektrisch verbindbar sind.

12. Vorrichtung nach einem der Ansprüche 1 bis 11,
dadurch gekennzeichnet,
daß die Vorrichtung aus einem elektrisch leitenden Werkstoff besteht bzw. mit einem solchen verkleidet oder überzogen ist.

13. Vorrichtung nach einem der Ansprüche 1 bis 12,
dadurch gekennzeichnet,
daß zwischen den elektrischen Leitungen und dem Tragkörper (24,27,29) ein aus elektrisch leitendem Werkstoff bestehendes Zwischenstück angeordnet ist, das die Leitungen mit dem Tragkörper elektrisch verbindet.

## Claims

1. Apparatus (10) for preventing mechanical stress on conduits (2), said apparatus having a main body (9, 9'), at least one connecting body (1), by means of which the conduits (2) are connectable to the main body (9, 9'), and at least one securing member (14, 14'), which is provided with snap-fitting and/or locking means (16, 18) and is connectable to a carrier (24, 27, 29), preferably a rail, the snap-fitting and/or locking means (16, 18) having different configurations, so that the securing member (14, 14') is connectable to at least two, three or more carriers (24, 27, 29) of different types, characterised in that the securing member (14, 14') is formed integrally with the main body (9).

2. Apparatus according to claim 1 for conduits disposed parallel and adjacent to one another, characterised in that the main body (9, 9') is an elongate body, which has retaining members, preferably projection members (12), for the conduits (2).

3. Apparatus according to claim 1 or 2, characterised in that the main body (9, 9') extends in the direction of the carriers (24, 27, 29), while the retaining members (12) are disposed parallel and adjacent to one another and point in the direction of the conduits (2).

4. Apparatus according to one of claims 1 to 3, characterised in that at least two securing members (14, 14') are provided.

5. Apparatus according to one of claims 1 to 4, characterised in that the securing members (14, 14') are disposed with spacings therebetween.

6. Apparatus according to one of claims 1 to 5, characterised in that the securing members (14, 14') are disposed in the end region of the main bodies (9, 9').

7. Apparatus according to one of claims 1 to 6, characterised in that the securing members (14') are separate component parts, which are connectable to the main body (9').

8. Apparatus according to one of claims 1 to 7, characterised in that the securing members (14, 14') are detachably connectable to the carrier (24, 27, 29).

9. Apparatus according to one of claims 1 to 8, the securing member of which (14, 14') is connectable to a U-shaped rail (24) having bent portions (26, 27'), characterised in that the snap-fitting and/or locking means (16, 18) are connectable to the bent portions (26, 27') in a form- and/or force-locking manner.

10. Apparatus according to one of claims 1 to 9, characterised in that the snap-fitting and/or locking means (16, 18) are formed from a resiliently deformable material.

11. Apparatus according to one of claims 1 to 10, characterised in that the electric conduits (2) are electrically connectable to the carrier (24, 27, 29).

12. Apparatus according to one of claims 1 to 11, characterised in that the apparatus is formed from an electrically conductive material or respectively is covered or coated with such a material.

13. Apparatus according to one of claims 1 to 12, characterised in that an intermediate piece is disposed between the electric conduits and the carrier (24, 27, 29), said intermediate piece being formed from electrically conductive material and electrically connecting the conduits to the carrier.

## Revendications

1. Dispositif (10) pour empêcher que des contraintes mécaniques soient exercées sur des câbles (2), dispositif comprenant un corps de base (9, 9'), au moins un corps de liaison (1), permettant de relier les câbles (2) au corps de base (9, 9'), et avec au moins un organe de fixation (14, 14') avec des moyens à cliquet *et/ou* d'encliquetage (16, 18), organe de fixation (14, 14') pouvant être relié à un support (24, 27), 29), de préférence un rail, où les moyens à cliquet et/ou d'encliquetage (16, 18) présentent des formes variables, de sorte que l'organe de fixation (14, 14') peut être relié à au moins deux, trois ou plusieurs supports (24, 27, 29) de nature variable,
caractérisé
en ce que l'organe de fixation (14, 14' est réalisé en une pièce avec le corps de base (9).

2. Dispositif suivant la revendication 1 pour des câbles disposés parallèlement côte à côte,
caractérisé
en ce que le corps de base (9, 9') est un corps allongé, qui présente pour les câbles (2) des organes de retenue, de préférence des protubérances (12).

3. Dispositif suivant la revendication 1 ou la revendication 2,
caractérisé en ce que le corps de base (9, 9') s'étend en direction des supports (24, 27, 29), tandis que les organes de retenue (12) sont disposés parallèlement côte à côte et sont orientés dans la direction des câbles (2).

4. Dispositif suivant l'une quelconque des revendications de 1 à 3,
caractérisé en ce qu'au moins deux organes de fixation (14, 14') sont prévus.

5. Dispositif suivant l'une quelconque des revendications de 1 à 4,
caractérisé
en ce que les organes de fixation (14, 14') sont disposés à distance l'un de l'autre.

6. Dispositif suivant l'une quelconque des revendications de 1 à 5,
caractérisé
en ce que les organes de fixation (14, 14') sont disposés dans la zone terminale des corps de base (9, 9').

7. Dispositif suivant l'une quelconque des revendications de 1 à 6,
caractérisé
en ce que les organes de fixation (14') sont des pièces séparées, qui peuvent être reliées au corps de base (9').

8. Dispositif suivant l'une quelconque des revendications de 1 à 7,
caractérisé
en ce que les organes de fixation (14, 14') peuvent être reliés de manière amovible au corps de base (9').

9. Dispositif suivant l'une quelconque des revendications de 1 à 8, dont l'organe de fixation (14, 14') peut être relié à un rail en forme de U (24) présentant des cintrages (26, 27')
caractérisé
en ce que les moyens à cliquet et/ou d'encliquetage (16, 18) peuvent être reliés aux cintrages (26. 27') par similitude de forme et/ou par voie mécanique.

10. Dispositif suivant l'une quelconque des revendications de 1 à 9,
caractérisé
en ce que les moyens à cliquet et/ou d'encliquetage (16, 18) sont constitués par un matériau à déformation élastique.

11. Dispositif suivant l'une quelconque des revendications de 1 à 10,
caractérisé
en ce que les câbles électriques (2) peuvent être reliés à connexion électrique au corps de support (24, 27, 29).

12. Dispositif suivant l'une quelconque des revendications de 1 à 11,
caractérisé
en ce que le dispositif est constitué par un matériau conducteur électrique ou bien est recouvert ou revêtu d'un tel matériau.

13. Dispositif suivant l'une quelconque des revendications de 1 à 12,
caractérisé
en ce qu'entre les câbles électriques et le corps de support (24, 27, 29) est disposé une pièce intercalaire en un matériau conducteur électrique, qui connecte à conductivité électrique les câbles au corps de support.
